(19) Europäisches Patentamt
European Patent Office
Office européen des brevets

(11) Veröffentlichungsnummer: **0 038 778**
**A2**

# (12) EUROPÄISCHE PATENTANMELDUNG

(21) Anmeldenummer: **81810144.6**

(22) Anmeldetag: **15.04.81**

(51) Int. Cl.³: **C 07 F 9/48**
A 01 N 57/20

(30) Priorität: **21.04.80 CH 3059/80**

(43) Veröffentlichungstag der Anmeldung:
**28.10.81 · Patentblatt 81/43**

(84) Benannte Vertragsstaaten:
**AT BE CH DE FR GB IT LI NL**

(71) Anmelder: **CIBA-GEIGY AG**
**Patentabteilung Postfach**
**CH-4002 Basel(CH)**

(72) Erfinder: **Maier, Ludwig, Dr.**
**Im Lee 28**
**CH-4144 Arlesheim(CH)**

## (54) Alkylphosphonite, Verfahren zu deren Herstellung sowie die Verwendung von Alkylphosphoniten als Fungizide.

(57) Es werden fungizide Mittel beschrieben, die als Wirkstoff ein Alkylphosphonit der Formel

RPH(O)OX (I)

enthalten, worin R $C_1$-$C_4$-Alkyl und X für Wasserstoff, $C_1$-$C_4$-Alkyl oder für ein Ammoniumion, ein Hydraziniumion oder ein Metallion der ersten bis vierten Hauptgruppe oder der ersten bis achten Nebengruppe, mit den ihm zukommenden Wertigkeiten, steht. Sie besitzen eine für praktische Zwecke sehr günstige kurative, präventive und systemische Wirkung zum Schutz von Kulturpflanzen, ohne diese durch unerwünschte Nebenwirkungen zu beeinflussen. Ueberdies wird eine Gruppe neuer Verbindungen im Umfang der Formel I beschrieben, sowie deren Herstellung.

EP 0 038 778 A2

Croydon Printing Company Ltd.

CIBA-GEIGY AG
Basel (Schweiz)

5-12811/=

# Alkylphosphonite, Verfahren zu deren Herstellung sowie die Verwendung von Alkylphosphoniten als Fungizide

Die vorliegende Erfindung betrifft fungizide Mittel, enthaltend als mindestens eine aktive Komponente ein Alyklphosphonit der Formel I

$$RPH(O)OX \qquad (I),$$

worin R $C_1$-$C_4$-Alkyl bedeutet und X für Wasserstoff, $C_1$-$C_4$-Alkyl oder für ein Ammoniumion, ein Hydraziniumion oder ein Metallion der ersten bis vierten Hauptgruppe oder der ersten bis achten Nebengruppe, mit den ihm zukommenden Wertigkeiten, steht, zusammen mit einem oder mit mehreren geeigneten Trägerstoffen und die Verwendung dieser Verbindungen der Formel I zur Bekämpfung und/oder präventiven Verhütung eines Befalls durch Pilze.

Alkyl steht hier und im folgenden für Methyl, Ethyl, n-Propyl, iso-Propyl, n-Butyl, iso-Butyl, sek.-Butyl oder tert.-Butyl. Als Metallionen kommen u.a. die Kationen folgender Elemente in Frage: Alkalimetalle wie Lithium, Natrium oder Kalium; Erdalkalimetalle wie Magnesium, Calcium, Strontium oder Barium; Elemente der ersten bis achten Nebengruppen wie Chrom, Mangan, Eisen, Kobalt, Nickel, Kupfer, Zink, Silber, Quecksilber, insbesondere Eisen, Mangan, Kupfer und Zink; Elemente der dritten und vierten Hauptgruppe wie Aluminium, Silicium, Zinn, Blei, insbesondere Aluminium, wobei die Metallionen in den Salzen bzw. Komplexen der Formel I in den ihnen zukommenden Wertigkeiten vorliegen.

Als Ammoniumionen kommen z.B. in Frage: $NH_4$, $NH(Alkyl)_3$, $NH_2(Alkyl)_2$ und $NH_3(Alkyl)$ wie $NH(CH_3)_3$, $NH(C_2H_5)_3$, $NH_2(CH_3)_2$, $NH_2(C_3H_7\text{-n})_2$, $NH_3CH_3$, $NH_3C_4H_9\text{-n}$ oder quaternäre Ammoniumionen wie Tetraethyl-, Tetrapropyl-, Tetrabutyl-, Tetrapentyl-, Tetrahexyl-, Tetraheptyl-, Tetraoctyl-, Tetranonyl-, Tetradecyl-, Methyltributyl-, Dimethyldibutyl-, Trimethylbutyl-, Methyltrioctyl-, Benzyltrimethyl-, Benzyltriethyl-, Benzyltripropyl-, Benzyltributyl-, Benzyldimethylhexadecyl-, Benzyldiethylhexadecyl-, Diisobutyl-cresoxyethyl-dimethylbenzyl-, Trimethylphenyl-, Diphenylmethyl-, Butyltripropyl-, Tributylphenyl- oder Tricaprylmethyl-Ammonium. Als Hydraziniumionen kommen unsubstituierte und substituierte Hydraziniumverbindungen in Frage wie $NH_2NH_3$, $NH_2N(Alkyl)_3$, $NH_2NH(Alkyl)_2$, $NH_2NH_2(Alkyl)$ usw.

Alkylphosphonite der Formel I zeigen ein wertvolles Fungizid-Spektrum und lassen sich insbesondere gegen phytopathogene Pilze zum Schutz von Kulturpflanzen einsetzen, ohne letztere zu schädigen. Zu den bevorzugten Verbindungen gehören die Salze der Formel I. Besonders bevorzugt aufgrund ihrer fungiziden Wirkung sind die Metallsalze, insbesondere die Aluminium-, Mangan- und Kupfersalze der Formel I, vor allem die Aluminium- und Mangansalze. Eine interessante Gruppe von Fungiziden besteht aus den Niederalkylammoniumsalzen der Formel I. Als Einzelverbindungen werden besonders bevorzugt: Aluminium-tris-(ethylphosphonit), O-Ethyl-methylphosphonit, Mangan-bis(ethylphosphonit), Kupfer-bis(ethylphosphonit) und Aluminium-tris(methylphosphonit).

Die Herstellung, chemische sowie physikalische Eigenschaften von alkylphosphonigen Säuren, ihren Salzen und Estern sind im Prinzip bekannt. Vergleiche hierzu: Organic Phosphorus Compounds, ed. G.M. Kosalopoff u. L. Maier, John Wiley & Sons, New York, N.Y., Vol. 4, 260-462 (1972) und die dort zitierte Literatur. Bilogische Eigenschaften dieser Verbindungen sind bisher nicht bekannt geworden.

Alkylphosphonige Säuren können nach einer ganzen Reihe von Methoden hergestellt werden, so z.B. analog zu F. Guichard, Ber., 32,

1572 (1899) durch Hydrolyse von Alkalidihalogenphosphinen der Formel $RPX_2$, wobei R die unter Formel I angegebenen Bedeutungen hat und X für Halogen, insbesondere für Chlor oder Brom steht, unter Abspaltung entsprechender Halogenwasserstoffsäuren:

$$R\text{-}PX_2 + 2H_2O \longrightarrow (I) + 2HX$$

Setzt man in obigen Reaktionen statt Wasser ein $C_1$-$C_4$-Alkanol der Formel $R_1OH$ ein, wobei $R_1 = C_1$-$C_4$-Alkyl bedeutet, [G.M. Kosolapoff, J. Amer. Chem. Soc., 72 (1950)], so lassen sich durch analoge Alkoholyse die entsprechenden Ester der Formel I herstellen:

$$R\text{-}PX_2 + 2R_1OH \longrightarrow (I) + R_1\text{-}X + HX$$

Die Alkali- und Erdalkalisalze der Formel I werden nach an sich bekannter Art durch Neutralisation der freien alkylphosphonigen Säure der Formel I, worin R für Wasserstoff steht und der äquivalenten Menge des entsprechenden Alkali- oder Erdalkalihydroxids erhalten.

Eine engere Gruppe von Alkylphosphoniten der Formel I ist neu. Diese Untergruppe der Formel R'PH(O)OX', worin R' $C_1$-$C_4$-Alkyl bedeutet und X' für ein Ammoniumion, ein Hydraziniumion oder ein Metallion der dritten und vierten Hauptgruppe oder der ersten bis achten Nebengruppe steht, soll hier und im folgenden Ia genannt werden.

Die vorliegende Erfindung betrifft somit auch die Verbindungen der Untergruppe Ia und ihre Herstellung.

Verbindungen der Formel Ia werden erfindungsgemäss hergestellt, im Falle der Ammonium- und Hydraziniumsalze, wahlweise entweder

a) durch Reaktion einer alkylphosphonigen Säure der Formel R'PH(O)OH, worin R' für $C_1$-$C_4$-Alkyl steht, mit der äquivalenten Menge eines Amins oder Hydrazins; oder

b) durch Reaktion eines Alkylesters, bevorzugt Niederalkylesters einer alkylphosphonigen Säure der Formel R'PH(O)OH, worin R' für $C_1$-$C_4$-Alkyl steht, mit einem Ammonium- bzw. Hydraziniumhalogenid, bevorzugt Chlorid oder Bromid, unter Abspaltung des entsprechenden Alkylhalogenids; oder

c) durch Reaktion eines Alkylphosphonigsäurealkylesters der Formel I mit einem tertiären Amin unter Quaternierung,

oder im Falle der Metallsalze der Nebengruppenelemente und der Hauptgruppenelemente der dritten und vierten Hauptgruppe,

d) durch Reaktion eines Alkylphosphonigsäurealkylesters der Formel I mit einem Metallhalogenid oder durch Reaktion eines Alkalisalzes der Formel I mit einem Sulfat,Nitrat oder Halogenid, vorzugsweise Chlorid, oder Bromid des Haupt- bzw. Nebengruppenelementes.

Bei allen Verfahren ist die Verwendung reaktionsinerter Lösungs- oder Verdünnungsmittel vorteilhaft, jedoch nicht zwingend notwendig. Ausser den üblichen organischen Lösungsmitteln kann in manchen Fällen auch Wasser eingesetzt werden. Uebliche Lösungs- und Verdünnungsmittel sind beispielsweise aliphatische und aromatische Kohlenwasserstoffe wie Benzol, Toluol, Xylole, Petrolether; halogenierte Kohlenwasserstoffe wie Chlorbenzole, Methylenchlorid, Ethylenchlorid, Chloroform, Tetrachlorethylen; Ether und etherartige Verbindungen wie Dialkylether (Diethylether, Diisopropylether, tert.-Butylmethylether usw.), Anisol, Dioxan, Tetrahydrofuran; Nitrile wie Acetonitril, Propionitril und Gemische solcher Lösungsmittel untereinander.

Die Reaktionstemperaturen liegen im allgemeinen zwischen 0° und +180°C, bevorzugt 20° und 150°C, wobei aufgrund der Disproportionierungstendenz der vorliegenden Verbindungsklasse, in manchen Fällen, milde Reaktionstemperaturen bevorzugt werden.

Alle Ausgangsverbindungen sind bekannt oder werden nach an sich bekannten Methoden hergestellt.

Fungizide auf Alkylphosphit-Basis werden in deutscher Offenlegungsschrift Nr. 2'456'627 beschrieben, darunter auch das im Handel befindliche Produkt der Formel:

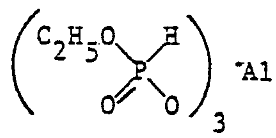

Gegenüber jenen Alkylphosphit-Derivaten besitzen die Verbindungen der Formel I den Vorteil, dass sie aufgrund der fehlenden P-O-Alkyl-Bindung weniger leicht hydrolysiert werden und dadurch ihre Wirkung länger entfalten.

Es wurde überraschend gefunden, dass Verbindungen der Formel I ein für praktische Bedürfnisse sehr günstiges Mikrobizid-Spektrum aufweisen. Sie lassen sich beispielsweise zum Schutz von Kulturpflanzen verwenden.

Das Haupteinsatzgebiet von Verbindungen der Formel I liegt in der Bekämpfung von schädlichen Mikroorganismen, vor allem von phytopathogenen Pilzen. So besitzen die Verbindungen der Formel I eine für praktische Bedürfnisse sehr günstige kurative, präventive und systemische Wirkung zum Schutz von Kulturpflanzen, ohne diese durch unerwünschte Nebenwirkungen zu beeinflussen. Kulturpflanzen seien im Rahmen vorliegender Erfindung beispielsweise: Getreide: (Weizen, Gerste, Roggen, Hafer, Reis); Rüben: (Zucker- und Futterrüben); Kern-, Stein- und Beerenobst: (Aepfel, Birnen, Pflaumen, Pfirsiche, Mandeln, Kirschen, Erd-, Him- und Brombeeren); Hülsenfrüchte:

(Bohnen, Linsen, Erbsen, Soja); Oelkulturen: (Raps, Senf, Mohn, Oliven, Sonnenblumen, Kokos, Rizinus, Kakao, Erdnüsse); Gurkengewächse: (Kürbis, Gurken, Melonen); Fasergewächse: (Baumwolle, Flachs, Hanf, Jute); Citrusfrüchte: (Orangen, Zitronen, Pampelmusen, Mandarinen); Gemüsesorten: (Spinat, Kopfsalat, Spargel, Kohlarten, Möhren, Zwiebeln, Tomaten, Kartoffeln, Paprika) oder Pflanzen wie Mais, Tabak, Nüsse, Kaffee, Zuckerrohr, Tee, Weinreben, Hopfen, Bananen- und Naturkautschukgewächse sowie Zierpflanzen.

Mit den Wirkstoffen der Formel I können an Pflanzen oder an Pflanzenteilen (Früchte, Blüten, Laubwerk, Stengel, Knollen, Wurzeln) dieser und verwandter Nutzkulturen die auftretenden Mikroorganismen eingedämmt oder vernichtet werden, wobei auch später zuwachsende Pflanzenteile von derartigen Mikroorganismen verschont bleiben. Die Wirkstoffe sind gegen die den folgenden Klassen angehörenden phytopathogenen Pilze wirksam: Ascomycetes, Basidiomycetes, insbesondere gegen Phycomycetes wie z.B. Phytophthora und Plasmopara.

Ueberdies wirken die Verbindungen der Formel I systemisch. Sie können ferner als Beizmittel zur Behandlung von Saatgut (Früchte, Knollen, Körner) und Pflanzenstecklingen zum Schutz vor Pilzinfektionen sowie gegen im Erdboden auftretende phytopathogene Pilze eingesetzt werden.

Die Erfindung betrifft somit ferner die Verwendung der Verbindungen der Formel I zur Bekämpfung phytopathogener Mikroorganismen bzw. zur präventiven Verhütung eines Befalls an Pflanzen.

Die erfinderischen Phosphonite der Formel I weisen gegenüber den zitierten Verbindungen ein zum Schutz von Kulturpflanzen verbessertes Mikrobizid-Spektrum auf und zeichnen sich bei den im Pflanzenschutz üblichen Aufwandmengen durch fehlende Phytotoxizität aus, so dass sie Kulturpflanzen vor schädlichen Mikroorganismen schützen, ohne sie dabei zu schädigen.

Zur Bekämpfung dieser Mikroorganismen können die Verbindungen der Formel I für sich allein oder zusammen mit geeigneten Trägern und/oder anderen Zuschlagstoffen verwendet werden. Geeignete Träger und Zuschlagstoffe können fest oder flüssig sein und entsprechen den in der Formulierungstechnik üblichen Stoffen wie z.B. natürlichen oder regenerierten mineralischen Stoffen, Lösungs-, Dispergier-, Netz-, Haft-, Verdickungs-, Binde- oder Düngemitteln. Wirkstoffe der Formel I können auch im Gemisch mit z.B. pestiziden oder pflanzenwuchsverbessernden Präparaten verwendet werden.

Der Gehalt an Wirkstoff liegt in handelsfähigen Mitteln übliweise zwischen 0,01 und 90%.

In Abhängigkeit von physikalischen Parametern wie Aggregatzustand, Lösungskonzentration, Herstellungsweg usw. liegen Verbindungen der Formel I monomer oder oligomer vor, häufig dimer. Insbesondere neigen Metallsalze zur Aggregation. So liegt beispielsweise Aluminiumtris(methylphosphonit) in $D_2O$ in folgender Form vor:

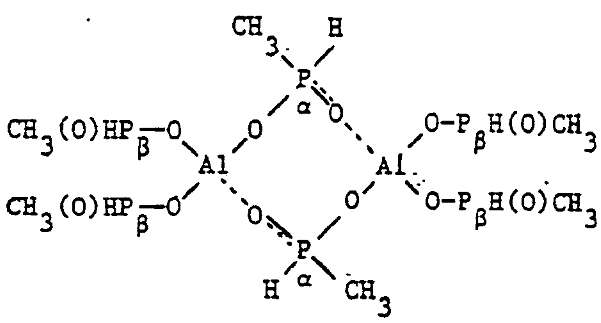

Das 1H-NMR-Spektrum in $D_2O$ zeigt bei einer Messfrequenz von 60 MHz folgende chemische Verschiebung $\delta$ in ppm:

$PCH_3$: $\delta$ = 1,4 (d, $J_{PCH}$ = 15 Hz, 3H)

PH : $\delta$ = 7,0 (d, $J_{PH}$ = 540 Hz, 1H)

Das entkoppelte $^{31}P$-NMR-Spektrum in $D_2O$ ergibt bei einer Messfrequenz von 24.28 MHz zwei Signale

für $P_\beta H$ bei - 22,88 ppm und

für $P_\alpha H$ bei - 26,5 ppm.

Die dimere Form wird eindeutig durch das 1:2-Verhältnis der Signale $P_\alpha:P_\beta$ bewiesen.

Die vorliegende Erfindung betrifft Verbindungen der Formel I sowohl in ihrer monomeren, als auch einer ihrer oligomeren Formen. Die Formel I schliesst demgemäss hier und im folgenden jede dieser Formen ein.

In den nachfolgenden Beispielen sind Temperaturen in Celsiusgraden angegeben. Teile und Prozentangaben beziehen sich stets auf das Gewicht.

Herstellungsbeispiele:

Beispiel 1: Herstellung von

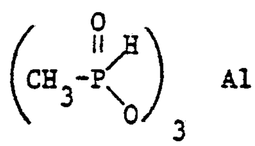

(1)

Aluminium-tris(methylphosphonit)

Zu 24,3 g O-Ethyl-methylphosphonit in 200 ml Toluol werden unter Rühren 3,3 g $AlCl_3$ zugegeben. Hierbei tritt eine exotherme Reaktion unter $C_2H_5Cl$-Entwicklung ein, und es fällt ein kristallines, farbloses Produkt aus. Das heterogene Gemisch wird noch 3 Stunden bei 110°C gehalten, abgekühlt, mit Diethylether versetzt und filtriert. Der Rückstand wird wiederholt mit Diethylether gewaschen und restliches Lösungsmittel im Vakuum entfernt. Man erhält auf diese Weise 6,6 g (= 100% der Theorie) Aluminium-tris(methylphosphonit) als farblose, kristalline, wasserlösliche Substanz.

| | | | | |
|---|---|---|---|---|
| Analyse: | Ber: | C 13,65%, | H 4,58%, | P 35,0% |
| | Gef: | C 13,00%, | H 5,00%, | P 33,50% |

Beispiel 2: Herstellung von

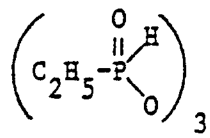 Al (5)

Aluminium-tris(ethylphosphonit)

Zu einer unter Kühlung hergestellten Lösung von 127,3 g (0,95 Mol) $AlCl_3$ in 480 ml Nitrobenzol lässt man bei 100°C unter Rühren eine Lösung von 350 g (2,86 Mol) O-Ethyl-ethyl-phosphonit in 66 ml Nitrobenzol innerhalb von 2 Stunden zutropfen. Es tritt heftige Ethylchloridentwicklung auf. Nach Beendigung der Gasentwicklung wird das Reaktionsgemisch auf 120°C erhitzt. Dabei ist erneut eine Gasentwicklung zu beobachten. Nach weiteren 2 Stunden wird das Gemisch auf Raumtemperatur abgekühlt, mit 3 Liter Aceton versetzt und stark gerührt, wobei farbloses, kristallines Aluminium-tris(ethylphosphonit) ausfällt. Dieses wird abfiltriert, wiederholt mit Diethylether gewaschen und im Vakuum getrocknet.
Ausbeute: 283 g (= 96,98% der Theorie),

Analyse:

| | | | | |
|---|---|---|---|---|
| Ber.: | C 23,54%; | H 5,93%; | P 30,36%; | Al 8,82% |
| Gef.: | C 23,70%; | H 6,20%; | P 30,30%; | Al 8,85% |

Beispiel 3: Herstellung von

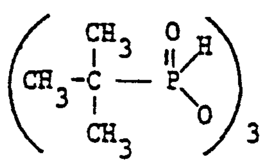 Al (11)

Aluminium-tris(tertiär-butylphosphonit)

Zu 10 g (62,9 mMol) tert.-Butyldichlorphosphin werden tropfenweise 20 ml verdünnte Salzsäure gegeben und das Lösungsmittel im

Vakuum entfernt. Die als Rückstand verbleibende tert.-butylphosphonige Säure wird mit wässriger Natronlauge neutralisiert und mit einer Lösung von 7,87 g (20,97 mMol) $Al(NO_3)_3 \cdot 9H_2O$ in 15 ml Wasser versetzt. Es bildet sich ein weisser Niederschlag von Aluminium-tris(tertiär-butylphosphonit), dieser wird abfiltriert, gewaschen und getrocknet. Ausbeute: 6 g (= 73,3% der Theorie)

Analyse

| | | | | |
|---|---|---|---|---|
| Ber.: | C 36,93%; | H 7,75%; | P 23,81%; | Al 6,91% |
| Gef.: | C 35,40%; | H 7,80%; | P 23,80%; | Al 6,83% |

Beispiel 4: Herstellung von

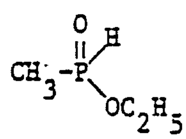

(16)

O-Ethyl-methylphosphonit

Zu 233,8 g (2 Mol) Methyldichlorphosphin, gelöst in 1200 ml Diethylether, lässt man unter Rühren und Eiskühlung eine Lösung von 280 ml Ethanol und 280 ml Triethylamin, gelöst in 400 ml Diethylether, tropfen. Man rührt noch 10 Stunden, filtriert das Ammoniumsalz ab und destilliert das Filtrat. Auf diese Weise erhält man 168,5 g (= 78% der Theorie) O-Ethyl-methylphosphonit als klare farblose Flüssigkeit mit Sdp. 71°C/20 Torr.

Beispiel 5: Herstellung von

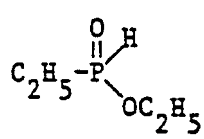

(17)

O-Ethyl-ethylphosphonit

Analog zu Beispiel 4 erhält man aus 52,4 g Ethyldichlorphosphin in 240 ml Diethylether, 44,2 g Ethanol, 40,5 g Triethylamin in 80 ml Diethylether nach fraktionierter Destillation 47,4 g (= 97% der Theorie) O-Ethyl-ethylphosphonit als farblose, klare Flüssigkeit mit Sdp. 70-74°C/18 Torr.

Beispiel 6: Herstellung von

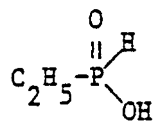

(19)

Ethylphosphonige Säure

Zu 100 g (0,764 Mol) Ethyldichlorphosphin in 500 ml Dioxan lässt man unter Eiskühlung und unter Rühren 50 ml Wasser tropfen. Das Gemisch wird noch 10 Stunden bei Raumtemperatur gerührt und anschliessend das Lösungsmittel und überschüssiges Wasser im Hochvakuum entfernt. Ausbeute: 71,8 g (= 100% der Theorie). Farbloses Oel mit $n_{26}^{D}$ = 1.4498.

Beispiel 7: Herstellung von

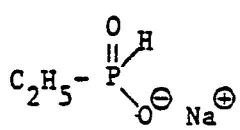

(25)

Natrium-ethylphosphonit

Zu 8,9 g (95,4 mMol) Ethylphosphonige Säure in 30 ml Wasser lässt man unter Rühren 3,82 g (95,4 mMol) Natriumhydroxid in 20 ml Wasser zutropfen und rührt das Reaktionsgemisch bei Raumtemperatur. Nach Abziehen des Lösungsmittels im Hochvakuum erhält man 11,0 g (= 100% der Theorie) farbloser Kristalle mit Smp.> 300°C.

Beispiel 8: Herstellung von

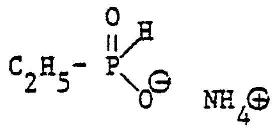

(26)

Ammonium-ethylphosphonit

Zu 8,9 g (95,4 mMol) Ethylphosphonige Säure in 30 ml Wasser wird unter Rühren bei 20-30°C eine äquivalente Menge einer wässrigen Ammoniaklösung zugetropft. Das Reaktionsgemisch wird noch 2 Stunden bei Raumtemperatur weitergerührt und anschliessend das Lösungsmittel im Hochvakuum entfernt.

Ausbeute: 10,1 g farbloser Kristalle (= 95,3% der Theorie)

Smp. 81-84°C.

Beispiel 9: Herstellung von

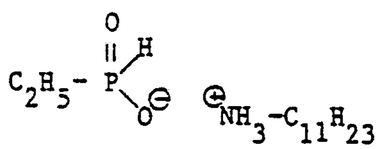

(28)

Undecylammonium-ethylphosphonit

Zu 8,9 g (95,4 mMol) Ethylphosphonige Säure in 30 ml Wasser werden unter Rühren bei 20-30°C 20,5 ml (95,4 mMol) Undecylamin,gelöst in 20 ml Wasser, zugetropft. Das Reaktionsgemisch wird noch 2 Stunden bei Raumtemperatur weitergerührt und anschliessend das Lösungsmittel im Hochvakuum entfernt.

Ausbeute: 21,1 g (= 83,4% der Theorie) gelbes Oel.

Analyse:

| | | |
|---|---|---|
| Ber.: | N 5,28%; | P 11,67% |
| Gef.: | N 5,27%; | P 11,53% |

Beispiel 10: Herstellung von

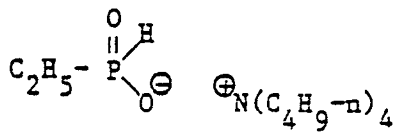 (23)

Tetrabutylammonium-ethylphosphonit

Zu 8,9 g (95,4 mMol) Ethylphosphonige Säure in 30 ml Wasser werden unter Rühren bei 20-30°C 91,9 ml wässrige Tetrabutylammoniumhydroxid-Lösung (40%ig = 95,4 mMol) zugetropft. Das Reaktionsgemisch wird noch 12 Stunden bei Raumtemperatur weitergerührt und anschliessend das Lösungsmittel im Hochvakuum entfernt. Man erhält 26,7 g (= 83% der Theorie) eines hellgelben Oels.

Beispiel 11: Herstellung von

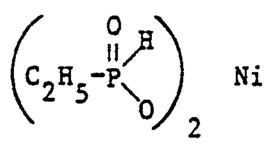 (27)

Nickel-bis(ethylphosphonit)

Zu einer Lösung von 7,5 g (79,7 mMol) Ethylphosphonige Säure in 100 ml Wasser werden bei Raumtemperatur und unter Rühren 4,7 g (39,9 mMol) Nickelcarbonat gegeben. Das Reaktionsgemisch wird 1 Stunde unter Rückfluss erhitzt, dabei ist $CO_2$-Entwicklung zu beobachten. Anschliessend wird das Wasser im Vakuum entfernt. Ausbeute: 9,7 g (= 100% der Theorie) grüner Feststoff.

Beispiel 12: Herstellung von

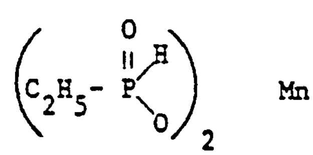 (7)

Mangan-bis(ethylphosphonit

Zu einer Lösung von 7,5 g (79,7 mMol) Ethylphosphonige Säure in 100 ml Wasser werden unter Rühren bei Raumtemperatur portionsweise 4,6 g (39,9 mMol) Mangancarbonat gegeben. Das Reaktionsgemisch wird noch 1 Stunde unter Rückfluss erhitzt. Anschliessend wird das Wasser im Vakuum entfernt. Ausbeute: 7,9 g (= 82,3% der Theorie) farblose Kristalle.

Beispiel 13: Herstellung von

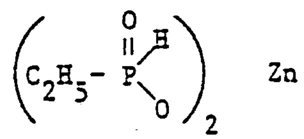 (6)

Zink-bis(ethylphosphonit)

Zu einer Lösung von 7,5 g (79,7 mMol) Ethylphosphonige Säure in 100 ml Wasser werden unter Rühren bei Raumtemperatur portionsweise 7,3 g (39,3 mMol) basisches Zinkcarbonat gegeben. Nach beendigter $CO_2$-Entwicklung wird das Reaktionsgemisch noch 1 Stunde unter Rückfluss erhitzt. Anschliessend wird das Wasser im Vakuum entfernt. Ausbeute: 4,9 g (49% der Theorie) weisser Feststoff.

Beispiel 14: Herstellung von

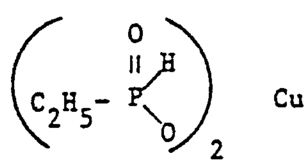 (8)

Kupfer-bis(ethylphosphonit)

Zu einer Lösung von 3,5 g (37,2 mMol) ethylphosphonige Säure in 100 ml Wasser werden unter Rühren bei Raumtemperatur portionsweise 2,3 g (18,6 mMol) Kupfercarbonat gegeben. Nach Beendigung der $CO_2$-Entwicklung wird das Wasser aus dem Reaktionsgemisch bei 30-40°C im Hochvakuum entfernt. Ausbeute: 4,6 g (= 100% der Theorie) brauner Festkörper.

Auf analoge Weise lassen sich folgende Produkte der Formel I herstellen:

**Tabelle 1:** 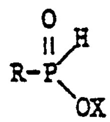 (I)

| Verb. Nr. | R | X | Physikalische Konstanten bzw. Elementaranalyse: berechnet / gefunden in % |
|---|---|---|---|
| 1 | $CH_3$ | 1/3 Al | C 13.65; H 4,58; P 35,0<br>C 13,00; H 5,00; P 33,5 |
| 2 | $CH_3$ | 1/2 Mn | |
| 3 | $CH_3$ | 1/2 Fe | |
| 4 | $CH_3$ | 1/2 Sn | |
| 5 | $C_2H_5$ | 1/3 Al | C 23,54; H 5,93; P 30,36; Al 8,82<br>C 23,70; H 6,20; P 30,30; Al 8,85 |
| 6 | $C_2H_5$ | 1/2 Zn | weisser Feststoff |
| 7 | $C_2H_5$ | 1/2 Mn | weisser Feststoff |
| 8 | $C_2H_5$ | 1/2 Cu | brauner Feststoff |
| 9 | $C_3H_7$-i | 1/3 Al | |
| 10 | $C_3H_7$-n | 1/2 Mn | |
| 11 | $(CH_3)_3C$ | 1/3 Al | C 36,93; H 7,75; P 23,81; Al 6,91<br>C 35,40; H 7,80; P 23,80; Al 6,83 |

| Verb. Nr. | R | X | Physikalische Konstante bzw. Elementaranalyse: berechnet / gefunden in % |
|---|---|---|---|
| 12 | $C_4H_9$-n | 1/3 Al | |
| 13 | $(CH_3)_3C$ | Na | |
| 14 | $CH_3$ | 1/2 Mg | |
| 15 | $CH_3$ | $CH_3$ | |
| 16 | $CH_3$ | $C_2H_5$ | Sdp. 71°C/20 Torr |
| 17 | $C_2H_5$ | $C_2H_5$ | Sdp. 70-74°C/18 Torr |
| 18 | $CH_3$ | $C_4H_9$-n | |
| 19 | $C_2H_5$ | H | zähflüssiges Oel, $n_D^{26}$ = 1.4498 |
| 20 | $CH_3$ | $NH(CH_3)_3$ | |
| 21 | $CH_3$ | $N(C_4H_9\text{-n})_4$ | |
| 22 | $CH_3$ | $NH_4$ | |
| 23 | $C_2H_5$ | $N(C_4H_9\text{-n})_4$ | hellgelbes Oel |
| 24 | $C_3H_7$-i | $NH_2NH_3$ | |
| 25 | $C_2H_5$ | Na | Smp. > 300°C |
| 26 | $C_2H_5$ | $NH_4$ | Smp. 81-84°C |
| 27 | $C_2H_5$ | 1/2 Ni | grüner Feststoff |
| 28 | $C_2H_5$ | $NH_3C_{11}H_{23}$ | N 5,28; P 11.67<br>N 5,27; P 11,53 |

Die nachfolgende, beispielhafte Aufzählung soll die Beschaffenheit solcher Mittel näher erläutern.

Zur Applikation können die Verbindungen der Formel I in den folgenden Aufarbeitungsformen vorliegen.

Formulierungsbeispiele

Beispiel 15: Feste Aufarbeitungsformen:

Stäube- und Streumittel enthalten im allgemeinen bis zu 100% des Wirkstoffes. Ein 5%iges Stäubemittel kann beispielsweise aus 5 Teilen des Wirkstoffs und 95 Teilen eines Zuschlagstoffes wie Talkum bestehen oder aus 5 Teilen Wirkstoff, 4 Teilen hochdisperser Kieselsäure und 91 Teilen Talkum. Darüberhinaus sind weitere Gemische mit solchen und anderen in der Formulierungstechnik gebräuchlichen Trägermaterialien und Zuschlagstoffen denkbar. Bei der Herstellung dieser Stäubemittel werden die Wirkstoffe mit den Träger- und Zuschlagstoffen vermischt und vermahlen und können in dieser Form verstäubt werden.

Granulate wie Umhüllungsgranulate, Imprägniergranulate, Homogengranulate und Pellets(=Körner) enthalten üblicherweise 1 bis 80% des Wirkstoffs. So kann sich ein 5%iges Granulat z.B. aus 5 Teilen des Wirkstoffs, 0,35 Teilen epoxidiertem Pflanzenöl, 0,25 Teilen Cetylpolyglykolether, 3,50 Teilen Polyethylenglykol und 91 Teilen Kaolin (bevorzugte Korngrösse 0,3-0,8 mm) zusammensetzen. Man kann bei der Herstellung des Granulates wie folgt vorgehen:

Die Aktivsubstanz wird mit epoxidiertem Pflanzenöl vermischt und mit 6 Teilen Aceton gelöst, hierauf wird Polyethylenglykol und Cetylpolyglykolether zugesetzt. Die so erhaltene Lösung wird auf Kaolin aufgesprüht und anschliessend wird das Aceton im Vakuum verdampft. Ein derartiges Mikrogranulat wird vorteilhaft zur Bekämpfung von Bodenpilzen verwendet.

Beispiel 16: Flüssige Aufarbeitungsformen

Man unterscheidet im allgemeinen zwischen Wirkstoffkonzentraten, die in Wasser dispergierbar oder löslich sind und Aerosolen. Zu den in Wasser dispergierbaren Wirkstoffkonzentraten zählen z.B. Spritzpulver (wettable powders) und Pasten, die üblicherweise in den Handelspackungen 25-90% und in gebrauchsfertigen Lösungen 0,01 bis 15% des Wirkstoffs enthalten. Emulsionskonzentrate enthalten 10 bis 50% und Lösungskonzentrate enthalten in der gebrauchsfertigen Lösung 0,0001 bis 20% Aktivsubstanz. So kann ein 70%iges Spritzpulver z.B. aus 70 Teilen des Wirkstoffs, 5 Teilen Natriumdibutylnaphthylsulfonat, dazu 3 Teilen Naphthalinsulfonsäuren-Phenolsulfonsäuren-Formaldehyd-Kondensat (im Mischverhältnis 3:2:1), 10 Teilen Kaolin und 12 Teilen Kreide, z.B. Champagne-Kreide, zusammengesetzt sein. Ein 40%iges Spritzpulver kann z.B. aus folgenden Stoffen bestehen: 40 Teile Wirkstoff, 5 Teile Natrium-Ligninsulfonat, 1 Teil Natrium-Dibutylnaphthylsulfonat und 54 Teile Kieselsäure. Die Herstellung eines 25%igen Spritzpulvers kann auf unterschiedliche Art erfolgen. So kann dieses sich z.B. zusammensetzen aus: 25 Teilen der Aktivsubstanz, 4,5 Teilen Calcium-Ligninsulfonat, 1,9 Teilen Kreide (z.B. Champagne)-Kreide/Hydroxyethylencellulose-Gemisch (1:1), 1,5 Teilen Natrium-Dibutylnaphthylsulfonat, 19,5 Teilen Kieselsäure, 19,5 Teilen Kreide (z.B. Champagne-Kreide) und 28,1 Teilen Kaolin. Ein 25%iges Spritzpulver kann z.B. auch bestehen aus 25 Teilen Wirkstoff, 2,5 Teilen Isooctylphenoxypolyoxyethylen-ethanol, 1,7 Teilen (Champagne)-Kreide/Hydroxyethylcellulosegemisch (I:1), 8,3 Teilen Natriumsilikat, 16,5 Teilen Kieselgur und 46 Teilen Kaolin. Ein 10%iges Spritzpulver lässt sich z.B. herstellen aus 10 Teilen des Wirkstoffes, 3 Teilen eines Gemisches aus Natriumsalzen von gesättigten Fettalkoholsulfonaten, 5 Teilen Naphthalinsulfonsäure/Formaledehyd-Kondensat und 82 Teilen Kaolin. Andere Spritzpulver können Gemische darstellen aus 5 bis 30% der Aktivsubstanz zusammen mit 5 Teilen eines aufsaugenden Trägermaterials wie Kieselsäure, 55 bis

80 Teilen eines Trägermaterials wie Kaolin und eines Dispergiermittelgemisches, bestehend aus 5 Teilen Natrium-Arylsulfonats sowie aus 5 Teilen eines Alkylarylglykolethers. Ein 25%iges Emulsions-Konzentrat kann z.B. folgende emulgierbare Stoffe enthalten: 25 Teile des Wirkstoffs, 2,5 Teile epoxidiertes Pflanzenöl, 10 Teile eines Alkylarylsulfonat/Fettalkoholpolyglykolether-Gemisches, 5 Teile Dimethylformamid und 57,5 Teile Xylol.

Aus solchen Konzentraten können durch Verdünnen mit Wasser Emulsionen der gewünschten Anwendungskonzentration hergestellt werden, die besonders zur Blattapplikation geeignet sind. Darüberhinaus können weitere Spritzpulver mit anderen Mischungsverhältnissen oder anderen in der Formulierungstechnik gebräuchlichen Trägermaterialien und Zuschlagstoffen hergestellt werden. Die Wirkstoffe werden in geeigneten Mischern mit den genannten Zuschlagstoffen innig vermischt und auf entsprechenden Mühlen und Walzen vermahlen. Man erhält Spritzpulver von vorzüglicher Benetzbarkeit und Schwebefähigkeit, die sich mit Wasser zu Suspensionen der gewünschten Konzentration verdünnt und insbesondere zur Blattapplikation verwenden lassen. Solche Mittel gehören ebenfalls zur Erfindung.

Mittel, die nach der oben beschriebenen Art formuliert sind und als Wirkungskomponente eine Verbindung der Formel I (z.B. Verbindung Nr. 1, 5-8, 11, 16, 17, 19, 23, 25, 26 oder 27 enthalten, lassen sich mit sehr gutem Erfolg zur Bekämpfung von phytopathogenen Pilzen einsetzen. Mit gleich gutem oder ähnlichem Erfolg können auch andere Verbindungen aus Tabelle 1 eingesetzt werden.

Biologische Beispiele

Die in den nachfolgenden Beispielen verwendeten Spritzbrühen wurden, wie oben beschrieben, formuliert.

Beispiel 17: Wirkung gegen Plasmapora viticola auf Reben

a) Residual-protektive Wirkung

im 4-5 Blattstadium wurden Rebensämlinge mit einer aus Spritzpulver des Wirkstoffes hergestellten Spritzbrühe (0,06% Aktivsubstanz) besprüht. Nach 24 Stunden wurden die behandelten Pflanzen mit einer Sporangiensuspension des Pilzes infiziert. Nach einer Inkubation während 6 Tagen bei 95-100% relativer Luftfeuchtigkeit und 20°C wurde der Pilzbefall beurteilt.

b) Residual-kurative Wirkung

Im 4-5 Blattstadium wurden Rebensämlinge mit einer Sporangiensuspension des Pilzes infiziert. Nach einer Inkubation während 24 Stunden in einer Feuchtkammer bei 95-100% relativer Luftfeuchtigkeit und 20°C wurden die infizierten Pflanzen getrocknet und mit einer aus Spritzpulver des Wirkstoffes hergestellten Spritzbrühe (0,06% Aktivsubstanz) besprüht. Nach dem Antrocknen des Spritzbelages wurden die behandelten Pflanzen wieder in die Feuchtkammer gebracht. Die Beurteilung des Pilzbefalls erfolgte 6 Tage nach der Infektion.

Verbindungen der Formel I zeigten gegen Plasmopora viticola auf Reben eine sehr gute fungizide Wirkung. So hemmten Verbindungen aus Tabelle 1 den Pilzbefall auf weniger als 20%, im Vergleich zu unbehandelten aber infizierten Kontrollpflanzen (Befall = 100%). Die Wirkstoffe Nr. 1, 5, 7, 8, 11, 16, 23 und 26 stoppten den Pilzbefall fast vollständig (0 bis 5%).

Beispiel 18: Wirkung gegen Phytophthora infestans auf Tomatenpflanzen

a) Residual-protektive Wirkung

Tomatenpflanzen wurden nach 3-wöchiger Anzucht mit einer aus Spritzpulver des Wirkstoffes hergestellten Spritzbrühe (0,06% Aktivsubstanz)besprüht. Nach 24 Stunden wurden die behandelten Pflanzen mit einer Sporangiensuspension des Pilzes infiziert. Die Beurteilung des Pilzbefalls erfolgte nach einer Inkubation der infizierten Pflanzen während 5 Tagen bei 90-100% relativer Luftfeuchtigkeit und 20°C.

b) Residual-kurative Wirkung

Tomatenpflanzen wurden nach 3-wöchiger Anzucht mit einer Sporangiensuspension des Pilzes infiziert. Nach einer Inkubation von 22 Stunden in einer Feuchtkammer bei 90-100% relativer Luftfeuchtigkeit und 20°C wurden die infizierten Pflanzen getrocknet und mit einer aus Spritzpulver des Wirkstoffes hergestellten Spritzbrühe (0,06% Aktivsubstanz) besprüht. Nach dem Antrocknen des Spritzbelages wurden die behandelten Pflanzen wieder in die Feuchtkammer gebracht. Die Beurteilung des Pilzbefalls erfolgte 5 Tage nach der Infektion.

c) Systemische Wirkung

Zu Tomatenpflanzen wurde nach 3-wöchiger Anzucht eine aus Spritzpulver des Wirkstoffes hergestellte Spritzbrühe gegossen (0,06% Aktivsubstanz bezogen auf das Erdvolumen). Es wurde dabei darauf geachtet, dass die Spritzbrühe nicht mit den oberirdischen Pflanzenteilen in Berührung kam. Nach 48 Stunden wurden die behandelten Pflanzen mit einer Sporangiensuspension des Pilzes infiziert. Die Beurteilung des Pilzbefalls erfolgte nach einer Inkubation der infizierten Pflanzen während 5 Tagen bei 90-100% relativer Luftfeuchtigkeit und 20°C.

Verbindungen der Formel I zeigten gegen Phytophthora infestans auf Tomatenpflanzen eine sehr gute fungizide Wirkung. So hemmten Verbindungen aus Tabelle 1 den Pilzbefall auf weniger als 25% im Vergleich zu unbehandelten aber infizierten Kontrollpflanzen (Befall = 100%). Die Wirkstoffe Nr. 1, 5 und 11 reduzierten den Befall sogar auf 0 bis 10%.

Patentansprüche (für alle benannten Länder ausser Oesterreich)

1. Fungizide Mittel, enthaltend als mindestens eine aktive Komponente ein Alkylphosphonit der Formel I

$$RPH(O)OX \qquad (I),$$

worin R $C_1$-$C_4$-Alkyl bedeutet und X für Wasserstoff, $C_1$-$C_4$-Alkyl oder für ein Ammoniumion, ein Hydraziniumion oder ein Metallion der ersten bis vierten Hauptgruppe oder der ersten bis achten Nebengruppe steht, zusammen mit einem oder mit mehreren geeigneten Trägerstoffen.

2. Mittel nach Anspruch 1, dadurch gekennzeichnet, dass es als aktive Komponente ein Metallsalz der Formel I enthält.

3. Mittel nach Anspruch 1, dadurch gekennzeichnet, dass es ein Ammonium- oder Hydraziniumsalz der Formel I enthält.

4. Mittel nach Anspruch 2, dadurch gekennzeichnet, dass es ein Aluminiumsalz der Formel I enthält.

5. Mittel nach Anspruch 2, dadurch gekennzeichnet, dass es ein Mangansalz der Formel I enthält.

6. Mittel nach Anspruch 2, dadurch gekennzeichnet, dass es ein Kupfersalz der Formel I enthält.

7. Mittel nach Anspruch 3, dadurch gekennzeichnet, dass es ein Niederalkylammoniumsalz der Formel I enthält.

8. Mittel nach Anspruch 4, dadurch gekennzeichnet, dass es als mindestens eine aktive Komponente Aluminium-tris(methylphosphonit) enthält.

9. Mittel nach Anspruch 4, dadurch gekennzeichnet, dass es als mindestens eine aktive Komponente Aluminium-tris(ethylphosphonit) enthält.

10. Mittel nach Anspruch 5, dadurch gekennzeichnet, dass es als mindestens eine aktive Komponente Mangan-bis(ethylphosphonit) enthält.

11. Mittel nach Anspruch 6, dadurch gekennzeichnet, dass es als mindestens eine aktive Komponente Kupfer-bis(ethylphosphonit) enthält.

12. Verwendung von Alkaliphosphonit der Formel I nach Anspruch 1 zur Bekämpfung und/oder präventiven Verhütung eines Befalls durch phytopathogene Pilze.

13. Verwendung gemäss Anspruch 12 eines Alkylphosphonites der Formel I nach einem der Ansprüche 2 bis 11.

14. Alkylphosphonite der Formel Ia

$$R'PH(O)OX' \qquad (Ia),$$

worin R' $C_1$-$C_4$-Alkyl bedeutet und X' für ein Ammonium-, ein Hydraziniumion oder ein Metallion der dritten oder vierten Hauptgruppe oder der ersten bis achten Nebengruppe steht.

15. Die Metallsalze der Formel Ia nach Anspruch 14.

16. Die Ammonium- und Hydraziniumsalze der Formel Ia nach Anspruch 14.

17. Die Aluminiumsalze der Formel Ia nach Anspruch 15.

18. Die Mangansalze der Formel Ia nach Anspruch 15.

19. Die Kupfersalze der Formel Ia nach Anspruch 15.

20. Aluminium-tris(methylphosphonit).

21. Aluminium-tris(ethylphosphonit).

22. Mangan-bis(ethylphosphonit).

23. Kupfer-bis(ethylphosphonit).

24. Verfahren zur Herstellung von Alkylphosphon-Derivaten der Formel Ia nach Anspruch 14, gekennzeichnet im Falle der Ammonium- und Hydraziniumsalze, wahlweise entweder

a) durch Reaktion einer alkylphosphonigen Säure der Formel R'PH(O)OH, worin R' für $C_1$-$C_4$-Alkyl steht, mit einer äquivalenten Menge eines Amins oder Hydrazins; oder

b) durch Reaktion eines Alkylesters, einer alkylphosphonigen Säure der Formel R'PH(O)OH, worin R' für $C_1$-$C_4$-Alkyl steht,mit einem Ammonium- bzw. Hydraziniumhalogenid, unter Abspaltung des entsprechenden Alkylhalogenids; oder.

c) durch Reaktion eines Alkylphosphonigsäurealkylesters der Formel I mit einem tertiären Amin unter Quaternierung,

oder im Falle der Metall-salze der Nebengruppenelemente und der Hauptgruppenelemente der dritten und vierten Hauptgruppe,

d) durch Reaktion eines Alkylphosphonigsäurealkylester der Formel I mit einem Metallhalogenid oder durch Reaktion eines Alkalisalzes der Formel I mit einem Sulfat, Nitrat oder Halogenid des Haupt- bzw. Nebengruppenelementes.

25. Verfahren nach Anspruch 24, dadurch gekennzeichnet, dass man eine Verbindung der Formel Ia nach einem der Absprüche 15 bis 23 herstellt.

Patentansprüche: (für Oesterreich)

1. Fungizide Mittel, enthaltend als mindestens eine aktive Komponente ein Alkylphosphonit der Formel I

$$RPH(O)OX \quad (I),$$

worin R $C_1$-$C_4$-Alkyl bedeutet und X für Wasserstoff, $C_1$-$C_4$-Alkyl oder für ein Ammoniumion, ein Hydraziniumion oder ein Metallion der ersten bis vierten Hauptgruppe oder der ersten bis achten Nebengruppe steht, zusammen mit einem oder mit mehreren geeigneten Trägerstoffen.

2. Mittel nach Anspruch 1, durch gekennzeichnet, dass es als aktive Komponente ein Metallsalz der Formel I enthält.

3. Mittel nach Anspruch 1, dadurch gekennzeichnet, dass es ein Ammonium- oder Hydraziniumsalz der Formel I enthält.

4. Mittel nach Anspruch 2, dadurch gekennzeichnet, dass es ein Aluminiumsalz der Formel I enthält.

5. Mittel nach Anspruch 2, dadurch gekennzeichnet, dass es ein Mangansalz der Formel I enthält.

6. Mittel nach Anspruch 2, dadurch gekennzeichnet, dass es ein Kupfersalz der Formel I enthält.

7. Mittel nach Anspruch 3, dadurch gekennzeichnet, dass es ein Niederalkylammoniumsalz der Formel I enthält.

8. Mittel nach Anspruch 4, dadurch gekennzeichnet, dass es als mindestens eine aktive Komponente Aluminium-tris(methylphosphonit) enthält.

9. Mittel nach Anspruch 4, dadurch gekennzeichnet, dass es als mindestens eine aktive Komponente Aluminium-tris(ethylphosphonit) enthält.

10. Mittel nach Anspruch 5, dadurch gekennzeichnet, dass es als mindestens eine aktive Komponente Mangan-bis(ethylphosphonit) enthält.

11. Mittel nach Anspruch 6, dadurch gekennzeichnet, dass es als mindestens eine aktive Komponente Kupfer-bis(ethylphosphonit) enthält.

12. Verwendung eines Mittels nach Anspruch 1 zur Bekämpfung und/oder präventiven Verhütung eines Befalls durch phytopathogene Pilze.

13. Verwendung gemäss Anspruch 12 eines Mittels nach einem der Ansprüche 2 bis 11.

14. Verfahren zur Herstellung von Alkylphosphoniten der Formel Ia

$$R'PH(O)OX' \qquad (Ia),$$

worin R' $C_1$-$C_4$-Alkyl bedeutet und X' für eine Ammonium, ein Hydraziniumion oder ein Metallion der dritten oder vierten Hauptgruppe oder der ersten bis achten Nebengruppe steht, gekennzeichnet im Falle der Ammonium- und Hydraziniumsalze, wahlweise entweder

a) durch Reaktion einer alkylphosphonigen Säure der Formel R'PH(O)OH, worin R' für $C_1$-$C_4$-Alkyl steht, mit einer äquivalenten Menge eines Amins oder Hydrazins; oder

b) durch Reaktion eines Alkylesters, einer alkylphosphonigen Säure der Formel R'PH(O)OH, worin R' für $C_1$-$C_4$-Alkyl steht, mit einem Ammonium bzw. Hydraziniumhalogenid, unter Abspaltung des entsprechenden Alkylhalogenids; oder

c) durch Reaktion eines Alkylphosphonigsäurealkylesters der Formel I mit einem tertiären Amin unter Quaternierung,

oder im Falle der Metall-Salze der Nebengruppenelemente und der Hauptgruppenelemente der dritten und vierten Hauptgruppe,

d) durch Reaktion eines Alkylphosphonigsäurealkylester der Formel I mit einem Metallhalogenid oder durch Reaktion eines Alkalisalzes der Formel I mit einem Sulfat, Nitrat oder Halogenid des Haupt- bzw. Nebengruppenelementes.

15. Verfahren nach Anspruch 14, dadurch gekennzeichnet, dass man die Reaktion in einem reaktionsinerten Lösungsmittel bei Temperaturen von 0° bis +180°C durchführt.

16. Verfahren nach Anspruch 14, dadurch gekennzeichnet, dass man die Reaktion bei Temperaturen von 20° bis 150°C durchführt.

17. Verfahren nach einem der Ansprüche 14 bis 16, dadurch gekennzeichnet, dass man ein Metallsalz der Formel Ia gemäss Anspruch 14 herstellt.

18. Verfahren nach einem der Ansprüche 14 bis 16, dadurch gekennzeichnet, dass man ein Ammonium- oder ein Hydraziniumsalz der Formel Ia gemäss Anspruch 14 herstellt.

19. Verfahren nach Anspruch 17, dadurch gekennzeichnet, dass man eine Verbindung aus der Reihe
Aluminium-tris(methylphosphonit),
Aluminium-tris(ethylphosphonit),
Mangan-bis(ethylphosphonit) oder
Kupfer-bis(ethylphosphonit) herstellt.